# EUROPÄISCHE PATENTSCHRIFT

(11) **EP 1 353 130 B1**
(45) Veröffentlichungstag und Bekanntmachung des Hinweises auf die Patenterteilung: **28.06.2006**
(21) Anmeldenummer: 03008249.9
(22) Anmeldetag: 09.04.2003
(51) Int. Cl.: F24F 12/00, F24F 5/00

(54) **Einrichtung zum Eisfreihalten eines Wärmeaustauscherapparats**
System for keeping a heat exchange apparatus ice-free
Système pour maintenir sans glace un appareil d'échange de chaleur

(30) Priorität: 10.04.2002 DE 10215587
(43) Veröffentlichungstag der Anmeldung: 15.10.2003
(73) Patentinhaber: STIEBEL ELTRON GmbH & Co. KG, 37603 Holzminden (DE)
(72) Erfinder: Schaumlöffel, Michael, 37671 Höxter (DE); Schiefelbein, Kai, Dr., 37671 Höxter (DE)
(74) Vertreter: nospat Patentanwälte

(56) Entgegenhaltungen:
- DE-A- 10 007 077
- DE-A- 10 103 150
- DE-A- 19 500 527
- GB-A- 1 551 647
- US-A- 5 189 884
- US-A- 5 325 676
- PATENT ABSTRACTS OF JAPAN vol. 015, no. 160 (M-1105), 22. April 1991 (1991-04-22) -& JP 03 028687 A (SHOWA ALUM CORP), 6. Februar 1991 (1991-02-06)

## Beschreibung

Die Erfindung betrifft eine Einrichtung zum Abtauen oder Eisfreihalten eines Wärmeaustauscherapparats, über den beheizbaren Räumen Außenluft zuführbar und Raumluft abführbar ist.

Ein derartiger Wärmeaustauscherapparat ist bei der Klimaanlage der DE 197 02 903 A1 beschrieben. Der Wärmeaustauscherapparat ist ein Luft/Luft-Kreuzstrom- oder Kreuzgegenstrom- oder Gegenstrom-Wärmeaustauscher, der die Wärme der Abluft auf die zugeführte Außenluft überträgt. In der DE 197 02 903 A1 ist zur Raumheizung eine Wärmepumpe vorgesehen, die mit einem Luft-Kältemittel-Verdampfer arbeitet. Dieser liegt im Fortluftstrom des Wärmeaustauscherapparats. Es ist beschrieben, dass der Verdampfer vereisen kann. Um ihn abzutauen, wird der Wärmepumpenkreis umgeschaltet. Während des Abtauens ist die Wärmegewinnung für den Nutzkreis unterbrochen.

Die Gefahr einer Vereisung des Wärmeaustauscherapparats ist in der DE 197 02 903 A1 nicht gesehen.

In der nicht vorveröffentlichten Patentanmeldung DE-A-101 03 150.5 ist angegeben, wie der vom Außenluftstrom beaufschlagte Wärmeaustauscherapparat reiffrei und eisfrei zu halten ist. Hierfür ist im Außenluftstrom ein Wärmeaustauscher angeordnet, der in Reihe zum Verflüssiger der Wärmepumpe geschaltet ist und vom Kältemittel der Wärmepumpe durchströmt ist. Ein Abtauen bzw. Eisfreihalten kann nur erfolgen, wenn die Wärmepumpe im Betrieb ist.

Die GB 1551647 offenbart eine Anlage zur Wärmerückgewinnung aus Abluft, wobei unter Kenntnis des Problems eines Vereisens eines Wärmetauschers ein Wärmeübertrager im Frischluftzweig dem Luft-Luft-Wärmetauscher vorgelagert angeordnet ist. Dieser Wärmeübertrager erhält die zur Vorheizung der Frischluft notwendige Wärme durch einen zweiten mit ihm gekoppelten Wärmeübertrager, der im Fortluftzweig dieser Vorrichtung angeordnet ist. Die beiden Wärmeübertrager sind als Verdampfer und Kondensator in einem geschlossenen und ein wärmeübertragendes Fluid enthaltenes System miteinander gekoppelt.

Aufgabe der Erfindung ist es, eine Einrichtung vorzuschlagen, mit der der Wärmeaustauscherapparat bei verbessertem Wirkungsgrad abzutauen bzw. eisfrei zu halten ist.

Erfindungsgemäß ist obige Aufgabe durch die Merkmale des Patentanspruchs 1 dadurch gelöst, dass bei einer Einrichtung zum Abtauen oder Eisfreihalten eines Wärmeaustauscherapparates, über den beheizbaren Räumen Außenluft zuführbar und Raumluft abführbar ist, bei der ein Wärmeaustauscher (6) und ein im Außenluftstrom (AU) des Wärmeaustauscherapparates (1) angeordnetes Heizregister (7) zu einem, ein Medium führenden Abtaukreis (5) geschaltet sind, der Wärmeaustauscher im Heizkreis der Räume angeordnet ist, wobei das Medium im Wärmeaustauscher verdampft und im Heizregister kondensiert.

Der Abtaukreis arbeitet nach dem Prinzip eines Wärmerohrs (heat pipe). Das Medium wird in dem im Heizkreis liegenden Wärmeaustauscher verdampft und überträgt Wärme auf das Heizregister und damit den zugeführten Außenluftstrom, wobei es im Heizregister kondensiert und zum Wärmeaustauscher zurückfließt. Es muss der Einrichtung damit keine zusätzliche Energie zugeführt werden. Vorzugsweise zirkuliert das Medium im Abtaukreis unter Schwerkraftwirkung. Eine elektrische Beheizung des Heizregisters ist nicht nötig. Ein aufwändiger Erdreich Wärmeaustauscher zum Eisfreihalten des Luft/Luft-Wärmeaustauschers erübrigt sich.

Da das Heizregister nicht von Wasser, sondern von einem Medium durchströmt ist, welches auch bei Temperaturen unter 0°C nicht in den festen Aggregatzustand übergeht, besteht nicht die Gefahr, dass das Heizregister einfriert.

Das Medium ist ein Kältemittel, das bei der Vorlauftemperatur oder der Rücklauftemperatur des Heizkreises der Räume verdampft. Als Medium eignet sich ein Kältemittel, wie es auch bei Wärmepumpen oder in Kühlaggregaten zur Verwendung kommt.

Bei der beschriebenen Einrichtung ist auch vermieden, dass der Wärmeaustauscherapparat mit Raumluft abgetaut wird. Es ist also nicht notwendig, im Wärmeaustauscherapparat Luftströme umzuschalten oder abzuschalten. Dies ist insbesondere bei sogenannten Passivhäusern günstig, weil durch die beschriebene Einrichtung kein Unterdruck im Haus erzeugt wird und dann infolge von Undichtigkeiten in der Gebäudehülle unkontrolliert Außenluft ins Haus strömen kann, wodurch die Energiebillanz des Hauses stark negativ verändert würde. Bei der Funktion der beschriebenen Einrichtung wird der Zuluftvolumenstrom nicht unterbrochen. Dies ist für die Lüftung eines Passivhauses wichtig, weil dort der Zuluftvolumenstrom oft die Heizung der Räume übernimrnt.

Weitere vorteilhafte Ausgestaltungen der Erfindung ergeben sich aus der folgenden Beschreibung von Ausführungsbeispielen. In der Zeichnung zeigen:

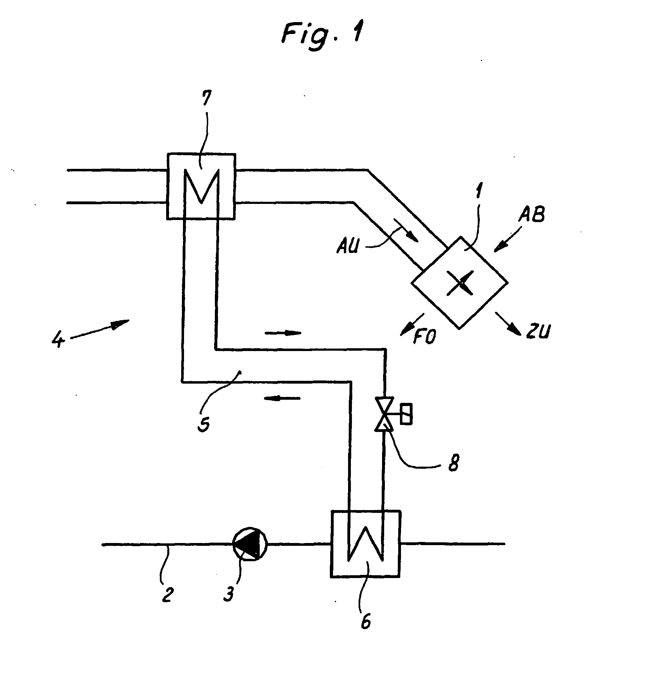

Figur 1 ein Blockschaltbild einer Lüftungsanlage eines Gebäudes mit einer Abtaueinrichtung,
Figur 2 eine Lüftungsanlage nach Fig. 1, wobei zur Beheizung eines Wärmepumpe vorgesehen ist, und
Figur 3 eine Alternative zu Fig. 2.

Eine Lüftungsanlage eines Gebäudes weist zur Wärmerückgewinnung einen Wärmeaustauscherapparat 1 auf, der ein Luft/Luft-Kreuzstrom- oder Kreuzgegenstrom-Wärmeaustauscher mit Zuluftlüfter und Abluftlüfter sein kann. Durch den Wärmeaustauscherapparat 1 wird Außenluft AU aus der Umgebung als Zuluft ZU den Räumen des Gebäudes zugeführt. Aus den Räumen wird Abluft AB abgeführt. Wärme der Abluft AB wird auf die Zuluft ZU übertragen. Die entwärmte Abluft wird anschließend als Fortluft nach draußen gefördert.

Die Lüftungsanlage weist zur Beheizung der Räume einen Heizkreis 2 auf, in dem üblicherweise eine Umwälzpumpe 3 von einem nicht dargestellten Solar-, Öl- oder Gas-Heizgerät erwärmtes Wasser zu nicht dargestellten Heizkörpern fördert. Die Heizkörper können in den Räumen installiert sein und/oder im Zuluftstrom ZU angeordnet sein.

Bei niedrigen Außentemperaturen unter ca. -3°C kann der Wärmeaustauscherapparat 1 vereisen. Um ein Vereisen, Bereifen zu vermeiden und den Wärmeaustauscherapparat 1 gegebenenfalls abzutauen, ist eine Einrichtung 4 vorgesehen.

Die Einrichtung 4 bildet einen Abtaukreis 5, in dem ein Wärmeaustauscher 6, ein Heizregister 7 und ein ein-ausschaltbares Abtaukreisventil 8, insbesondere Magnetventil, angeordnet sind. Der Wärmeaustauscher 6 ist im Rücklauf oder Vorlauf des Heizkreises 2 angeordnet. Das Heizregister 7 liegt im Außenluftstrom AU.

Der Abtaukreis 5 beinhaltet ein Medium, das im Wärmeaustauscher 6 bei der Temperatur des Heizkreises 2 verdampft, dann dampfförmig zum Heizregister 7 strömt, dort an die kalte Außenluft AU Wärme abgibt, dadurch kondensiert und über Schwerkraftwirkung zum Wärmeaustauscher 6 zurückfließt. Die Einrichtung arbeitet also als Wärmerohr (heat pipe). Dadurch wird aus der Wärme des Heizkreises 2 der Wärmeaustauscherapparat 1 eisfrei gehalten bzw. abgetaut.

Der Abtaukreis 5 arbeitet auch, wenn die Umwälzpumpe 3 ausfällt, da sich auch dann aufgrund der Temperatur- und Dichteunterschiede des Wassers im Heizkreis 2 eine Strömung einstellt, aus der der Wärmeaustauscher 6 Wärme auf das Heizregister 7 übertragen kann.

Das Abtaukreisventil 8 wird geschlossen, wenn nicht die Gefahr eines Vereisens des Wärmeaustauscherapparats 1 besteht. Das Ein- und Ausschalten kann außentemperaturabhängig erfolgen.

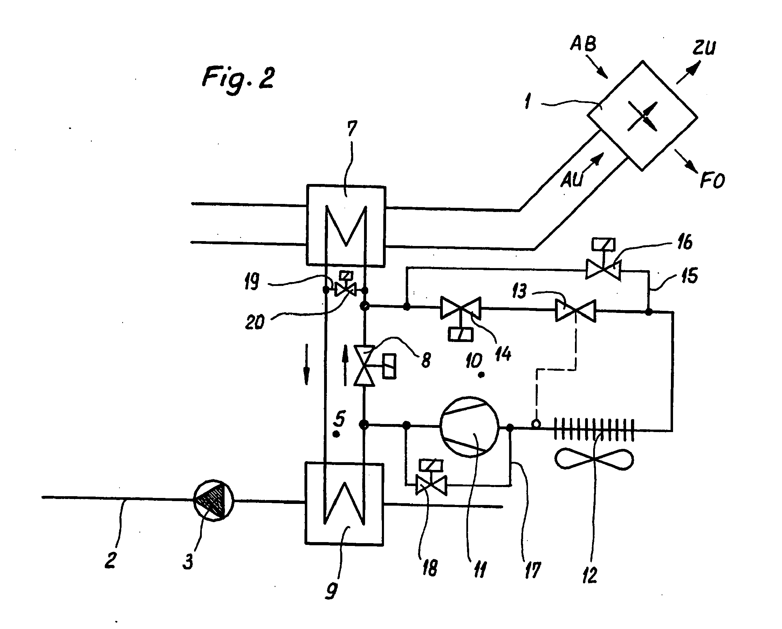

Nach Figur 2 ist der Heizkreis 2 in an sich bekannter Weise von einem Verflüssiger 9 einer Wärmepumpe 10 beheizt, die einen Verdichter 11, einen Luft-Kältemittel-Verdampfer 12 und ein Expansionsventil 13 aufweist. Im Wärmepumpenkreis ist ein weiteres Ventil 14 vorgesehen.

Der Verflüssiger 9 bildet zugleich den Wärmeaustauscher 6 des Abtaukreises 5. Das Kältemittel des Wärmepumpenkreises ist das Medium des Abtaukreises. Das Heizregister 7 ist an den Verflüssiger 9 angeschlossen.

Beim Betrieb der Wärmepumpe 10 nach Figur 2 ist das Abtaukreisventil 8 geschlossen und das weitere Ventil 14 geöffnet. Das Heizregister 7 liegt dabei in Strömungsrichtung des Kältemittels hinter dem Verflüssiger 9 und wird vom Kältemittel erwärmt, so dass es Wärme auf die Außenluft AU überträgt. Dadurch wird der Wärmeaustauscherapparat 1 eisfrei gehalten und das Kältemittel wird unterkühlt. Dies ist in der älteren Patentanmeldung 101 03 150.5 beschrieben.

Wird die Wärmepumpe 10 abgeschaltet, weil kein Wärmebedarf besteht, dann wird das weitere Ventil 14 geschlossen. Dieses liegt in Strömungsrichtung des Kältemittels vor dem Expansionsventil 13. Das weitere Ventil 14 kann ein Pump-down-Ventil sein. Je nach der Kältemittelfüllmenge und internen Volumina der Aggregate kann das Kältemittel über das weitere Ventil 14 von der Niederdruckseite des Wärmepumpenkreises jetzt noch auf die Hochdruckseite gepumpt werden, so dass für den Wärmerohreffekt eine ausreichende Menge von Arbeitsmedium zur Verfügung steht. Das Abtaukreisventil 8 wird geöffnet. Im Verflüssiger 9 wird nun dem Wasser des Heizkreises 2 Wärme entzogen, so dass das Kältemittel verdampft und zum Heizregister 7 strömt, dort an die Außenluft AU Wärme abgibt, kondensiert und zum Verflüssiger 9 unter Schwerkraftwirkung im Heizregister 7 kein Wärmetausch mehr stattfindet oder das Abtaukreisventil 8 geschlossen wird und die Wärmepumpe 10 wieder eingeschaltet wird.

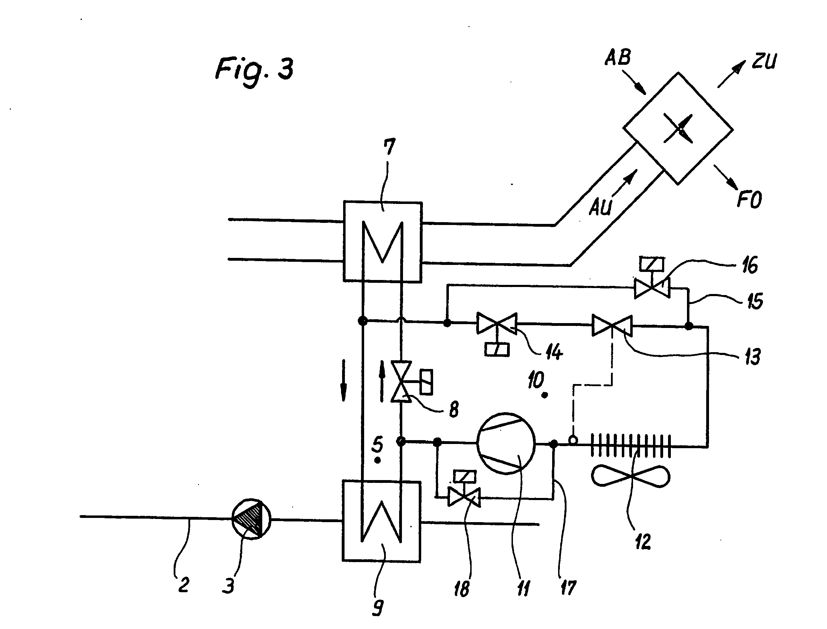

Das Ausführungsbeispiel nach Figur 3 entspricht dem von Figur 2, wobei jedoch das Heizregister 7 dem Verflüssiger 9 parallelgeschaltet ist. Ist das Abtaukreisventil 8 geöffnet und die Wärmepumpe 10 abgeschaltet, dann arbeitet der Abtaukreis 5 in der beschriebenen Weise. Ist die Wärmepumpe 10 in Betrieb und das Abtaukreisventil 8 geöffnet, dann wird der Verflüssiger 9 und das Heizregister 7 parallel vom Kältemittel durchströmt. Ist das Abtaukreisventil 8 geschlossen, wird nur der Verflüssiger 9 durchströmt.

In den Figuren 2 und 3 sind zusätzlich ein Bypass 15 mit Ventil 16 zu den Ventilen 13,14 und ein Bypass 17 mit Ventil 18 zu dem Verdichter 11 gezeigt. Durch Öffnen der Bypässe 15,17 lässt sich mit denbeschriebenen Mitteln auch der Verdampfer 12 der Wärmepumpe 10 abtauen. In Figur 2 ist ergänzend ein Bypass 19 mit Ventil 20 gezeigt. Dieser wird geöffnet, wenn das Kältemittel beim Abtauen des Verdampfers 12 nicht durch das Heizregister 7 strömen soll. Damit dient der Wärmeaustauscher 6 bzw. Verflüssiger 9 sowohl dem Eisfreihalten des Wärmeaustauscherapparats 1 als auch des Verdichters 12.

## Patentansprüche

1. Einrichtung zum Abtauen oder Eisfreihalten eines Wärmeaustauscherapparates, über den beheizbaren Räumen Außenluft zuführbar und Raumluft abführbar ist, bei der ein Wärmeaustauscher (6) und ein im Außenluftstrom (AU) des Wärmeaustauscherapparates (1) angeordnetes Heizregister (7) zu einem, ein Medium führenden Abtaukreis (5) geschaltet sind,
**dadurch gekennzeichnet,**
**dass** der Wärmeaustauscher (6) im Heizkreis (2) der Räume angeordnet ist,
wobei das Medium im Wärmeaustauscher (6) verdampft und im Heizregister (7) kondensiert.

2. Einrichtung nach Anspruch 1,
**dadurch gekennzeichnet,**
**dass** im Abtaukreis (5) ein ein-/ ausschaltbares Abtaukreisventil (8) angeordnet ist.

3. Einrichtung nach Anspruch 1 oder 2,
**dadurch gekennzeichnet,**
**dass** das Medium im Abtaukreis (5) unter Schwerkraftwirkung zirkuliert.

4. Einrichtung nach Anspruch 3,
**dadurch gekennzeichnet,**
**dass** das Medium derart gewählt ist, dass es bei Temperaturen unter 0°C flüssig oder gasförmig bleibt.

5. Einrichtung nach Anspruch 3,
**dadurch gekennzeichnet,**
**dass** das Medium ein Kältemittel ist, das bei der Vorlauftemperatur oder der Rücklauftemperatur des Heizkreises (2) verdampft.

6. Einrichtung nach einem der vorhergehenden Ansprüche, wobei der Heizkreis (2) von einem Verflüssiger (9) einer Wärmepumpe (10) beheizbar ist,
**dadurch gekennzeichnet,**
**dass** der Verflüssiger (9) der Wärmepumpe (10) den Wärmeaustauscher (6) des Abtaukreises (5) bildet, wobei das Medium des Abtaukreises (5) vom Kältemittel der Wärmepumpe (10) gebildet ist.

7. Einrichtung nach Anspruch 6,
**dadurch gekennzeichnet,**
**dass** das Heizregister (7) bei geschlossenem Abtaukreisventil (8) in Reihe zum Verflüssiger (9) der Wärmepumpe (10) liegt und dass bei geöffnetem Abtaukreisventil (8) und abgeschalteter Wärmepumpe (10) der Abtaukreis (5) wirksam ist.

8. Einrichtung nach Anspruch 7,
**dadurch gekennzeichnet,**
**dass** das Heizregister (7) in Strömungsrichtung des Kältemittels hinter dem Verflüssiger (9) liegt, wobei es im Betrieb der Wärmepumpe (9) das Kältemittel unterkühlt.

9. Einrichtung nach Anspruch 6,
**dadurch gekennzeichnet,**
**dass** das Heizregister (7) parallel zum Verflüssiger (9) der Wärmepumpe (10) geschaltet ist.

10. Einrichtung nach einem der vorhergehenden Ansprüche 6 bis 9,
**dadurch gekennzeichnet,**
**dass** im Wärmepumpenkreis (10) ein weiteres Ventil (14) angeordnet ist, das bei geöffnetem Abtaukreisventil (8) geschlossen ist.

11. Einrichtung nach Anspruch 10,
**dadurch gekennzeichnet,**
**dass** das weitere Ventil (14) mit Hilfe des Kompressors Kältemittel von der Niederdruckseite der Wärmepumpe (10) auf die Hochdruckseite der Wärmepumpe (10) gelangen lässt.

12. Einrichtung nach einem der vorhergehenden Ansprüche 6 bis 11,
**dadurch gekennzeichnet,**
**dass** mittels des Verflüssigers (9) des Abtaukreises (5) der Verdampfer (12) der Wärmepumpe (10) abtaubar ist.

## Claims

1. Device for defrosting or keeping free of ice a heat exchanger apparatus which can be used to supply external air to heatable rooms and discharge room air from said rooms, in which a heat exchanger (6) and a heater (7), which is arranged in the external air flow (AU) of the heat exchanger apparatus (1), are connected to a defrosting circuit (5) which conveys a medium, **characterised in that** the heat exchanger (6) is arranged in the heating circuit (2) of the rooms, wherein the medium evaporates in the heat exchanger (6) and condenses in the heater (7).

2. Device according to Claim 1, **characterised in that** a defrosting circuit valve (8) which can be opened and closed is arranged in the defrosting circuit (5).

3. Device according to Claim 1 or 2, **characterised in that** the medium circulates in the defrosting circuit (5) under the effect of gravity.

4. Device according to Claim 3, **characterised in that** the medium is selected such that it remains liquid or gaseous at temperatures below 0°C.

5. Device according to Claim 3, **characterised in that** the medium is a refrigerant which evaporates at the forward flow temperature or return flow temperature of the heating circuit (2).

6. Device according to any of the preceding Claims, wherein the heating circuit (2) can be heated by a condenser (9) of a heat pump (10), **characterised in that** the condenser (9) of the heat pump (10) forms the heat exchanger (6) of the defrosting circuit (5), wherein the medium of the defrosting circuit (5) is formed by the refrigerant of the heat pump (10).

7. Device according to Claim 6, **characterised in that** the heater (7) is in series with the condenser (9) of the heat pump (10) when the defrosting circuit valve (8) is closed, and **in that** the defrosting circuit (5) is active when the defrosting circuit valve (8) is open and the heat pump (10) is switched off.

8. Device according to Claim 7, **characterised in that** the heater (7) lies behind the condenser (9) in the flow direction of the refrigerant, wherein it undercools the refrigerant during Operation of the heat pump (10).

9. Device according to Claim 6, **characterised in that** the heater (7) is connected in parallel with the condenser (9) of the heat pump (10).

10. Device according to any of the preceding Claims 6 to 9, **characterised in that** a further valve (14) is arranged in the heat pump circuic (10), said further valve (14) being closed when the defrosting circuit valve (8) is open.

11. Device according to Claim 10, **characterised in that** the further valve (14), with the aid of the compressor, allows refrigerant to pass from the low-pressure side of the heat pump (10) to the high-pressure side of the heat pump (10) .

12. Device according to any of the preceding Claims 6 to 11, **characterised in that** the evaporator (12) of the heat pump (10) can be defrosted by means of the condenser (9) of the defrosting circuit (5).

## Revendications

1. Dispositif pour dégeler, ou libérer de la glace, un appareil échangeur de chaleur, par lequel de l'air extérieur peut être amené aux pièces pouvant être chauffées, et de l'air ambiant peut être évacué, sur lequel un échangeur de chaleur (6) et un registre de chauffage (7) disposé dans le flux d'air extérieur (AU) de l'appareil échangeur de chaleur (1) sont branchés pour former un circuit de dégel (5) véhiculant un fluide,
**caractérisé en ce que**
l'échangeur de chaleur (6) est disposé dans le circuit de chauffage (2) des locaux,
le fluide étant évaporé dans l'échangeur de chaleur (6) et condensé dans le registre de chauffage (7).

2. Dispositif selon la revendication 1,
**caractérisé en ce que**
une vanne de circuit de dégel (8), pouvant être connectée et déconnectée, est disposée dans le circuit de dégel (5).

3. Dispositif selon la revendication 1 ou 2,
**caractérisé en ce que**
le fluide circule dans le circuit de dégel (5) sous l'effet de la force de gravité.

4. Dispositif selon la revendication 3,
**caractérisé en ce que**
le fluide est choisi de telle sorte qu'il reste liquide ou gazeux à des températures inférieures à 0°C.

5. Dispositif selon la revendication 3,
**caractérisé en ce que**
le fluide est un agent réfrigérant qui s'évapore à la température aller ou à la température retour du circuit de chauffage (2).

6. Dispositif selon l'une quelconque des revendications précédentes, le dispositif de chauffage (2) pouvant être chauffé par un liquéfacteur (9) d'une pompe à chaleur (10),
**caractérisé en ce que**
le liquéfacteur (9) de la pompe à chaleur (10) forme l'échangeur de chaleur (6) du circuit de dégel (5), le fluide du circuit de dégel (5) étant formé par l'agent réfrigérant de la pompe à chaleur (10).

7. Dispositif selon la revendication 6,
**caractérisé en ce que**
le registre de chauffage (7) est disposé en série avec le liquéfacteur (9) de la pompe à chaleur (10) lorsque la vanne du circuit de dégel (8) est fermée et **en ce que** le circuit de dégel (5) est efficace lorsque la vanne du circuit de dégel (8) est ouverte et la pompe à chaleur (10) est déconnectée.

8. Dispositif selon la revendication 7,
**caractérisé en ce que**
le registre de chauffage (7) est disposé dans la direction d'écoulement de l'agent réfrigérant derrière le liquéfacteur (9), sachant qu'il surrefroidit l'agent réfrigérant pendant le fonctionnement de la pompe à chaleur (10).

9. Dispositif selon la revendication 6,
**caractérisé en ce que**
le registre de chauffage (7) est branché parallèlement au liquéfacteur (9) de la pompe à chaleur (10).

10. Dispositif selon l'une quelconque des revendications précédentes 6 à 9,
**caractérisé en ce que**
une autre vanne (14), qui est fermée lorsque la vanne du circuit de dégel (8) est ouverte, est disposée dans le circuit de la pompe à chaleur (10).

11. Dispositif selon la revendication 10,
**caractérisé en ce que**
l'autre vanne (14) fait parvenir à l'aide du compresseur de l'agent réfrigérant du côté basse pression de la pompe à chaleur (10) au côté haute pression de la pompe à chaleur (10).

12. Dispositif selon l'une quelconque des revendications précédentes 6 à 11,
**caractérisé en ce que**
l'évaporateur (12) de la pompe à chaleur (10) peut être dégelé au moyen du liquéfacteur (9) du circuit de dégel (5).
